# FASCICULE DE BREVET EUROPEEN

(11) **EP 0 440 539 B1**
(45) Date de publication et mention de la délivrance du brevet: **30.08.1995**
(21) Numéro de dépôt: 91400185.4
(22) Date de dépôt: 28.01.1991
(51) Int. Cl.: C11B 3/02, A23L 1/015, C08B 37/00, A23C 15/14

(54) **Procédé de raffinage de mélanges issus de traitements de milieux gras à l'aide de cyclodextrine et comprenant des complexes de cyclodextrine avec des composés lipophiles**
Verfahren zur Raffinierung von Mischungen erhalten durch Behandlung eines fetthaltigen Milieus mit Cyclodextrin und enthaltenen Komplexen von Cyclodextrin mit fettsäureartigen lipophilen Verbindungen
Process for refining mixtures resulting from treatment of fatty substances with cyclodextrin and containing complexes of cyclodextrin with fatty acid type lipophilic compounds

(30) Priorité: 29.01.1990 FR 9001009
(43) Date de publication de la demande: 07.08.1991
(73) Titulaire: Roquette Frères, F-62136 Lestrem (FR)
(72) Inventeur: Comini, Serge, F-59253 La Gorgue (FR); Mentink, Léon, F-59940 Estaires (FR)
(74) Mandataire: Boulinguiez, Didier

(56) Documents cités:
- DE-A- 3 226 232
- DE-A- 3 818 591
- US-A- 3 491 132
- DIE STÄRKE, vol. 27, no. 11, 1975, pages 368-376; J. SZEJTLI et al.: "Inclusion complexes of unsaturated fatty acids with amylose and cyclodextrin"
- DERWENT FILE SUPPLIER WPIL, 1989, accession no. 88-180176 (26), Derwent Publications Ltd, Londres, GB; & JP-A-63 118 339 (SHISEIDO)
- DERWENT FILE SUPPLIER WPIL, 1989, accession no. 86-172183 (27), Derwent Publications Ltd, Londres, GB; & JP-A-61 103 835 (TEIJIN K.K.)
- JOURNAL OF FOOD SCIENCE, vol. 48, 1983, pages 646-647; P. SHAW: "Debittering citrus juices with beta-cyclodextrin polymer"

## Description

L'invention a pour objet un procédé de raffinage de mélanges issus de traitements de milieux gras à l'aide de cyclodextrine et comprenant des complexes de cyclodextrine avec des composés lipophiles.

Par l'expression "milieu gras", on désigne toute substance contenant des matières grasses, à savoir:
- d'une part, les substances biologiques d'origine
   . animale, comme les matières grasses du groupe comprenant le suif, le saindoux, le beurre concentré, les huiles de poissons, la graisse de laine, le sang, les matériaux céphalorachidiens, l'oeuf, le lait et leurs dérivés,
   . végétale, comme les huiles végétales, les colophanes, les condensats de désodorisation, les milieux contenant des composés d'arôme tels que les huiles essentielles ou les oléorésines, les substances odorantes,
   . fossile, comme les huiles minérales, et
- d'autre part, les substances synthétiques, comme les arômes artificiels.

Les cyclodextrines sont des molécules cycliques de polyanhydroglucose de conformation tubulaire tronconique délimitant une cavité hydrophobe. Selon qu'elles sont constituées de 6, 7 ou 8 motifs anhydroglucose, elles sont dénommées respectivement alpha-, bêta- ou gamma-cyclodextrine.

Dans un souci de simplification, on utilise ci-après le terme général "cyclodextrine" pour désigner l'une quelconque des cyclodextrines alpha, bêta ou gamma, un mélange de celles-ci, ou bien encore des dérivés de cyclodextrine.

La cyclodextrine est préparée par traitement d'amidon liquéfié avec une enzyme, la cyclodextrine glycosyl-transférase.

Du fait de sa structure torique particulière, la cyclodextrine a pour propriété de capter sélectivement, dans sa cavité hydrophobe, diverses espèces moléculaires et groupements réactionnels appartenant essentiellement à des substances lipophiles. L'affinité de celles-ci vis-à-vis de la cyclodextrine (constante d'association) dépend de leur nature et de leur configuration chimique ainsi que de leur taille prise relativement par rapport à celle de la cavité de la cyclodextrine, dépendant elle-même du nombre de résidus de glucose.

Cette capacité naturelle complexante de la cyclodextrine commence à être mise à profit, notamment dans les secteurs de l'industrie alimentaire, de la pharmaco-cosmétologie ou de l'industrie en général.

Il a ainsi été envisagé d'utiliser la cyclodextrine dans des procédés d'une part d'élimination et de séparation de composés indésirables, d'autre part de récupération de composés à haute valeur ajoutée à partir de milieux gras biologiques.

Parmi ces procédés, on peut citer l'extraction de stéroïdes, notamment de cholestérol, de matières grasses ou de substances biologiques comme ceux décrits dans les demandes de brevet français N° 2.601.959 et 2.626.145.

On connaît également des procédés visant à extraire sélectivement des composés d'arôme présents dans les huiles essentielles ou à éliminer des composés de dégradation nuisibles au pouvoir aromatique de celles-ci [L. Szente "Cyclodextrin Workshop", Gand (1989), Part 2, pages 5-6].

Dans ces procédés, la cyclodextrine est mise en contact, en présence d'eau, avec le milieu biologique contenant les composés lipophiles à extraire, la cyclodextrine étant incorporée en quantité suffisante pour former des complexes avec ces composés. Une fois formés, ces complexes se retrouvent dans la phase aqueuse qui est séparée de la phase grasse.

A l'échelle industrielle, ces résidus aqueux, qui contiennent les composés à éliminer ou à purifier, sont générés en très grande quantité. A titre d'exemple, on peut se référer au procédé d'extraction du cholestérol de matières grasses, décrit dans la demande de brevet FR N° 2.601.959; la mise en oeuvre de ce procédé conduit à la formation d'environ 10% en poids de produit d'extraction par rapport à la matière grasse traitée en tête du procédé. On connaît également des procédés de déterpénation par la cyclodextrine comme celui décrit dans *Derwent File Supplier WPIL*, *1989 accession n*° *88-180176 (26)* & *JP-A-63 118 339*. Selon ce document, le procédé de déterpénation comprend une étape de complexation entre la cyclodextrine et les composés hydrophiles inclus dans l'huile essentielle, les composés lipophiles de l'huile essentielle ne formant pas de complexes d'inclusion. Ce procédé comprend également une étape d'extraction des composés hydrophiles d'abord à l'aide d'un solvant polaire, puis à l'aide d'un solvant faiblement polaire.

Il a également été envisagé d'utiliser la cyclodextrine pour adsorber de l'essence de Rhodophyta laurencia. L'adsorption peut être suivie par une élution à l'aide d'un solvant apolaire comme cela est décrit dans le document Derwent File Supplier WPIL, 1989 accession n° 86-172183 (26) & JP-A-61 103 835.

L'invention se propose de traiter et de valoriser ces mélanges résiduels aqueux survenant à l'issue des procédés d'extraction, en vue de récupérer sous forme sensiblement pure, chacun des constituants intéressants de ceux-ci, et en particulier la cyclodextrine qui pourrait ainsi être recyclée soit vers les procédés d'extraction de façon à diminuer le coût de ce dernier, soit vers d'autres applications. Il serait également intéressant de pouvoir récupérer certaines des substances grasses présentes dans les susdits mélanges, qu'elles soient ou non incluses dans la cavité interne de la cyclodextrine, et parmi lesquelles on peut citer des substances lipidiques recyclables, des stéroïdes comme le cholestérol, des vitamines et des composés d'arômes.

Mais le fractionnement, la séparation et la récupération sous une forme pure de ces divers constituants desdits mélanges qui se présentent comme des milieux hétérogènes complexes, sont rendus difficiles du fait de l'affinité extrémement grande qu'ont certaines substances lipophiles pour la cyclodextrine.

Jusqu'à présent, l'homme de l'art n'avait pas eu à résoudre un tel problème car l'emploi de la cyclodextrine pour l'extraction de ces diverses substances lipophiles n'en est qu'à ses premiers développements et constitue encore une technique de laboratoire.

L'article "Inclusion complexes of unsaturated fatty acid with amylose and cyclodextrin" de Szejtli et al., "Die Stärke" n°11 du 2.7.1975, pages 368 à 376, décrit un procédé d'extraction d'acides gras complexés avec de l'amylose et de la cyclodextrine en ayant recours à des mélanges eau/solvants polaires tels que l'éthanol.

Suivant ce procédé, les complexes sont lavés plusieurs fois avec le solvant. Dans le cas où l'on utilise l'éthanol, solvant présenté comme le plus performant pour décomplexer, il est nécessaire de répéter le lavage cinq fois pour extraire la majeure partie des acides gras. De plus, ce procédé conduit à d'importantes quantités de solutions hydroalcooliques diluées qui constituent des effluents difficiles à recycler et/ou à éliminer.

Une telle méthodologie est trop lourde et trop longue à mettre en oeuvre pour présenter un intérêt sur le plan industriel. En outre, elle n'apparaît pas comme étant particulièrement efficace.

On peut d'ailleurs remarquer que paradoxalement les complexes "cyclodextrine/acides gras" sont préparés en milieu hydroalcoolique, l'alcool étant précisément l'éthanol, solvant utilisé ensuite pour la décomplexation.

On connaît également des méthodes de dissociation de complexes cyclodextrine/composés lipophiles, par exemple celle employée dans les procédés de conversion microbiologique de stéroïdes utilisant comme additif de la β-cyclodextrine en vue de les solubiliser dans l'eau, milieu particulièrement adapté à ce type de réaction (cf. demande de brevet FR 2.513.656).

Suivant ces procédés, la β-cyclodextrine peut être récupérée du milieu aqueux de la bioconversion par extraction des stéroïdes avec un solvant organique tel que le diisopropyléther, puis par précipitation de la cyclodextrine libre au moyen d'un solvant tel que le trichloréthylène, le toluène, ou le cyclohexane, diminuant sa solubilité par formation d'un complexe. La cyclodextrine sous forme solide est ensuite isolée par filtration.

La technique de récupération mise en oeuvre ici est complexe et ne répond pas aux impératifs industriels de rentabilité économique. En outre, il ne permet pas de décomplexer et d'extraire une grande variété de composés lipophiles. Enfin, ce procédé de récupération est adapté spécifiquement au traitement de bioconversion de stéroïdes et ne pourrait pas être généralisé à d'autres applications.

Le susdit document enseigne également l'utilisation du diisopropyléther, solvant organique apolaire, pour l'extraction. Ceci va à l'encontre de ce qui est divulgué par le susdit article de Szejtli, à savoir l'emploi de solvants polaires pour extraire des acides gras complexés avec de la cyclodextrine.

L'invention a pour but, surtout, de remédier aux inconvénients de l'art antérieur.

Et il se trouve que la Société Demanderesse a eu le mérite de trouver, à l'issue de ses recherches approfondies, qu'il était possible, contrairement à ce que laissait prévoir la demande de brevet FR-A-2 513 656, à savoir que le solvant plus particulièrement adapté aux stéroïdes est le diisopropyléther, de séparer et de purifier certains des constituants d'un mélange obtenu après traitement d'un milieu biologique à l'aide de cyclodextrine, en lavant ledit mélange au moyen d'au moins un solvant polaire anhydre.

Il s'ensuit que l'invention a pour objet un procédé de raffinage de mélanges issus de traitements de milieux gras à l'aide de cyclodextrine et comprenant des complexes de cyclodextrine avec des composés lipophiles, notamment du type stéroïdes, caractérisé par le fait que l'on lave lesdits mélanges à l'aide d'au moins un solvant polaire anhydre, ce grâce à quoi on provoque au moins partiellement la dissociation des complexes cyclodextrine/composés lipophiles et on libère les composés lipophiles non inclus de leur liaison avec la cyclodextrine.

Ces substances étant libres, elles se séparent aisément de la cyclodextrine qui peut alors être récupérée sous forme solide puis réutilisée.

Le procédé conforme à l'invention permet de récupérer sous forme libre la majeure partie de la cyclodextrine initialement présente dans le mélange; ladite cyclodextrine peut être notamment réutilisée en amont, dans le traitement du milieu biologique, d'où économie. De plus, ce procédé permet également de récupérer de manière fractionnée ou non toutes les substances lipophiles d'origine y compris les stéroïdes, le cas échéant.

Ces substances grasses peuvent être valorisées en étant employées comme matières premières dans la fabrication de produits alimentaires, cosmétiques, industriels (oléochimie) ou autres. Il est également possible de faire subir à ces matières grasses des traitements de purification tels que la saponification, de façon à récupérer par exemple les insaponifiables dont les stéroïdes qui constituent des composés à haute valeur ajoutée.

Le solvant polaire anhydre est avantageusement choisi dans le groupe comprenant l'éthanol, le méthanol, l'isopropanol, le n-propanol, le n-butanol, l'acétone.

Il est également possible d'employer un mélange d'au moins deux solvants polaires anhydres, comme par exemple des mélanges éthanol/méthanol, éthanol/acétone, méthanol/acétone.

Le mélange de départ se présente de préférence sous forme solide ou semi-solide. On aura donc pris soin de le déshydrater au moins en partie s'il est initialement liquide.

La mise en oeuvre du procédé conforme à l'invention est effectuée à la température ambiante et sous pression atmosphérique, le mélange de départ étant additionné du solvant polaire dans une quantité suffisante pour obtenir une décomplexation, de préférence supérieure à environ 70% en poids par rapport au mélange sec de départ.

On agite ensuite énergiquement jusqu'à l'obtention d'une phase alcoolique contenant tous les composés lipophiles, inclus ou non dans la cyclodextrine. La cyclodextrine libre apparaît sous forme solide étant donné son insolubilité dans le solvant employé. Elle peut ainsi être recueillie aisément par tout moyen de séparation physique adapté, notamment par filtration ou par centrifugation. Pour optimiser sa transformation sous forme solide, il peut être intéressant de travailler à une température abaissée par rapport à la température ambiante.

La durée de mise en contact entre le mélange et le solvant doit évidemment être suffisante pour permettre l'extraction des composés lipophiles inclus ou non. Elle varie en fonction notamment de la vigueur de l'agitation et de la quantité de solvant. L'homme de métier est tout à fait à même de fixer ces paramètres qui ne sont pas fondamentaux dans le cadre du procédé suivant l'invention.

Les opérations de lavage au solvant et de séparation peuvent être répétées plusieurs fois sur le résidu solide obtenu. Leur nombre est fonction de la nature du milieu de départ et du degré de pureté souhaité. En un seul cycle, on extrait déjà au moins 90% des substances lipophiles initialement présentes dans le mélange à raffiner.

Le procédé conforme à l'invention apparaît comme étant de mise en oeuvre extrêmement simple. Il est performant et bénéficie d'une bonne rentabilité économique.

Conformément à une variante du procédé conforme à l'invention, le mélange de départ est soumis, préalablement au traitement à l'aide d'au moins un solvant polaire, à au moins un prétraitement à l'aide d'au moins un solvant apolaire propre à extraire les composés lipophiles les plus faiblement liés à la cyclodextrine.

Un tel prétraitement conduit à la formation d'une phase apolaire contenant une partie des composés lipophiles initialement présents dans le mélange et d'un mélange résiduel destiné à être traité à l'aide d'au moins un solvant polaire anhydre.

On sépare ainsi sélectivement les composés lipophiles à tendance apolaire présents dans le mélange, ce qui peut être particulièrement intéressant dans la mesure où la fraction recueillie est susceptible d'être réutilisée dans les milieux biologiques traités à l'aide de cyclodextrine.

Dans le cas où la cyclodextrine est employée en amont dans l'extraction de stérols d'un milieu biologique, la fraction recueillie à l'issue du prétraitement est essentiellement constituée de triglycérides.

Dans le cas où la cyclodextrine est employée en amont dans l'extraction d'arômes d'huiles essentielles, la fraction grasse recueillie à l'issue du prétraitement est semblable à l'huile essentielle appauvrie en composés d'arômes.

Pour minimiser les pertes de matière, il est avantageux de réincorporer la cyclodextrine dans le milieu biologique.

Le solvant apolaire est de préférence choisi dans les groupes comprenant les alcanes, les composés benzéniques, les dérivés chlorés et les étheroxydes. Plus préférentiellement encore, il peut être sélectionné dans le groupe comprenant l'hexane, le tétrachlorure de carbone, le benzène, le dioxane, l'éther de pétrole, le diisopropyléther, le trichloréthylène et le toluène. Il est apparu que l'hexane convient particulièrement bien à titre de solvant apolaire.

On peut avoir recours à des mélanges d'au moins deux solvants apolaires, par exemple on mélange de l'hexane et du tétrachlorure de carbone, ou de l'hexane et du diisopropyléther.

Les moyens techniques susceptibles d'être utilisés pour mettre en oeuvre aussi bien le traitement à l'aide de solvants polaires que le prétraitement à l'aide de solvants apolaires, peuvent être constitués notamment par une cuve équipée de moyens d'agitation et dont la sortie est reliée à des moyens de séparation en continu, comme par exemple une centrifugeuse, ou par une colonne de percolation contenant le mélange de départ sous une forme sensiblement anhydre au travers duquel on fait migrer les solvants.

Le traitement d'extraction à l'aide d'au moins un solvant polaire peut être mis en oeuvre dans le cadre d'une technique d'extraction au dioxyde de carbone supercritique.

De même, le prétraitement à l'aide d'au moins un solvant apolaire peut être remplacé par une technique d'extraction au CO₂ supercritique.

Cette technique connaît depuis quelques années un développement important. Elle consiste à exploiter les propriétés de solvant et de transporteur du CO₂ supercritique qui présente une viscosité proche de celle d'un gaz et une masse volumique voisine de celle d'un liquide.

Le CO₂ supercritique peut être utilisé notamment pour l'extraction de molécules thermosensibles et la récupération de composés apolaires. Il est donc particulièrement adapté pour le prétraitement prévu dans le procédé suivant l'invention.

Mis en oeuvre avec un co-solvant polaire, par exemple du type alcoolique choisi dans le groupe comprenant l'éthanol, le méthanol ou l'isopropanol, il s'est révélé être particulièrement bien adapté pour le traitement suivant l'invention. La concentration en solvant alcoolique est avantageusement comprise entre 1 et 10% en volume par rapport au CO₂, de préférence entre 3 et 5% en volume.

De façon connue en soi, cette technique au CO₂ supercritique se décompose essentiellement en trois phases: conditionnement du solvant, extraction, séparation.

Pour le conditionnement du solvant, le CO₂ gazeux sous une pression de l'ordre de 50 bars est tout d'abord purifié sur un lit de charbon actif pour éliminer les traces d'hydrocarbures, d'eau et de solvant alcoolique. Il est ensuite liquéfié par passage dans un condenseur tubulaire, puis stocké dans un pot de réserve où il peut être additionné d'un solvant alcoolique à l'aide d'une pompe doseuse.

Le CO₂ ou le mélange CO₂/solvant alcoolique est ensuite pompé à 450 bars, puis réchauffé à la température d'extraction comprise entre 25° et 100°C dans un échangeur de chaleur tubulaire.

Pour l'extraction, le CO₂, éventuellement additionné du solvant, conditionné à l'état supercritique, traverse la charge contenue dans un panier cylindrique à l'intérieur d'un extracteur, puis est soutiré avec l'extrait à débit constant sous une pression de 60 à 450 bars.

Pour séparer cet extrait du CO₂ supercritique, on procède à une détente du fluide dans des séparateurs, avantageusement deux séparateurs en série, à pression réglable de 50 à 250 bars.

L'enthalpie nécessaire à la vaporisation du CO₂ est fournie par une circulation d'eau chaude dans une double enveloppe. Il se produit une séparation quasi-totale entre l'extrait et le CO₂ gazeux sans phénomène de brouillard. Le CO₂ gazeux est recyclé après élimination de l'éventuel solvant alcoolique résiduel dans le décanteur.

Dans le cadre de l'application de cette technique en procédant suivant l'invention, les pressions d'extraction sont de préférence comprises entre 200 et 400 bars, pour des températures de 40 à 70°C, tandis que les pressions de séparation sont comprises entre 50 et 60 bars pour des températures de l'ordre de 50 à 70°C.

La mise en oeuvre de cette technique au CO₂ supercritique à titre de prétraitement du mélange de départ contenant les complexes permet d'extraire et de séparer les composés lipophiles apolaires les plus faiblement liés à la cyclodextrine de la même façon qu'un solvant apolaire.

Associée au traitement à l'aide de solvant polaire alcoolique, elle permet l'extraction de tous les composés lipophiles initialement présents dans le mélange et la récupération de la cyclodextrine libre purifiée.

Le procédé conforme à l'invention permet de traiter non seulement des mélanges issus de l'extraction de stéroïdes de milieux biologiques au moyen de cyclodextrine mais aussi des mélanges issus de l'extraction de vitamines, d'acides gras, de composés d'arôme ou autres.

L'invention pourra être mieux comprise à l'aide des exemples non limitatifs qui suivent et qui se rapportent à des modes de réalisation avantageux.

### EXEMPLE 1

### 1. Traitement du beurre en vue de l'extraction du cholestérol.

On traite 100 kg de beurre concentré par 5 kg de β-cyclodextrine (commercialisée par la Société Demanderesse sous la marque déposée KLEPTOSE) en solution dans 100 kg d'eau tiède.

Après mélange à 40°C et agitation à cette température pendant 5 heures, sous ambiance non oxydante, une phase grasse appauvrie en cholestérol se sépare d'une phase aqueuse. Cette dernière se clarifie lentement pour fournir un décantat présentant une matière sèche voisine de 65% et composée de 80% de β-cyclodextrine et de 20% environ de matières grasses.

Environ la moitié de la matière grasse totale contenue dans le décantat se présente sous forme adsorbée sur la β-cyclodextrine.

Le cholestérol représente 25% en poids des 20% de matière grasse totale.

### 2. Raffinage du décantat.

Le décantat obtenu comme décrit ci-dessus est déshydraté par lyophilisation. 2,53 g de ce décantat déshydraté et 300 cm³ de méthanol sont introduits dans un ballon muni d'un agitateur.

Un premier lavage au méthanol est conduit sous agitation pendant au moins cinq minutes.

On procède ensuite à une filtration sur papier filtre permettant d'obtenir un premier filtrat et un rétentat. Ce dernier est introduit dans le ballon pour un second lavage avec 300 cm³ de méthanol. On filtre à nouveau et on récupère un autre rétentat et un deuxième filtrat qui est mélangé au premier.

Ce mélange est placé sous un courant d'azote pour évaporer le solvant. On recueille ainsi 0,5 g de matière grasse correspondant à 98% de la matière grasse initialement présente dans le décantat. Une chromatographie sur couche mince de cette matière grasse recueillie permet de mettre en évidence des triglycérides, des acides gras libres et du cholestérol, c'est-à-dire tous les composés lipophiles initialement présents dans le décantat. Une chromatographie en phase gazeuse révèle que la quantité de cholestérol récupéré est de 0,126 g. Le rendement de récupération obtenu par ce procédé est donc voisin de 100%.

Le rétentat est séché dans une étuve sous vide maintenue à 30°C. La poudre obtenue est analysée par spectroscopie infrarouge et par chromatographie liquide qui permettent de vérifier qu'il s'agit essentiellement de cyclodextrine.

On obtient un résultat semblable en remplaçant le méthanol par de l'éthanol.

### EXEMPLE 2

2,67 g du décantat déshydraté de l'exemple 1, sont soumis aux mêmes lavages que ceux prévus dans le raffinage décrit à l'exemple 1, à la différence près que les 300 cm³ de méthanol employés pour chaque lavage sont remplacés par 100 cm³ d'hexane.

On récupère ainsi 0,23 g de matière grasse, ce qui correspond sensiblement à la totalité de la matière grasse adsorbée sur la cyclodextrine dans le décantat. Une analyse de celle-ci par chromatographie en couche mince révèle qu'elle est essentiellement constituée de triglycérides.

Le taux de cholestérol présent dans cette fraction lipidique récupérée par lavage à l'hexane a été mesuré par chromatographie en phase gazeuse. Il est inférieur à 0,1%.

Le raffinage conforme à l'invention permet ainsi d'extraire une première fraction lipidique la plus faiblement liée qui peut être valorisée de différentes façons, notamment par recyclage dans le procédé d'extraction en amont du raffinage.

Le rétentat est, quant à lui, séché. On vérifie par spectroscopie infrarouge qu'il contient toujours des complexes de cyclodextrine avec des composés lipophiles, essentiellement des stérols et des acides gras.

La substitution du tétrachlorure de carbone, du toluène, du trichloréthylène ou de l'éther isopropylique à l'hexane ne modifie en rien les résultats obtenus.

Le rétentat séché issu des lavages à l'hexane est soumis à deux lavages au méthanol dans les mêmes conditions que celles mises en oeuvre dans l'exemple 1.

A partir des filtrats, on récupère 0,24 g de matières grasses dont l'analyse par spectroscopie infrarouge et par chromatographie en couche mince révèle qu'elles sont constituées de cholestérol pour l'essentiel et d'acides gras.

On mesure le taux de cholestérol par chromatographie en phase gazeuse. Il est de l'ordre de 50%.

Cela correspond à un rendement de récupération en cholestérol de l'ordre de 95%.

Le rétentat est séché dans une étuve sous vide maintenue à 30°C. On a vérifié que les 2,15 g de poudre obtenue sont essentiellement constitués de β-cyclodextrine.

## Revendications

1. Procédé de raffinage de mélanges comprenant des complexes d'inclusion entre une cyclodextrine et des substances lipophiles caractérisé par le fait :
- que l'on déshydrate au moins en partie, lorsqu'il est initialement liquide, le mélange à raffiner,
- que l'on met en contact ledit mélange à l'état solide ou semi-liquide, avec au moins un solvant polaire anhydre,
- que l'on provoque au moins partiellement la dissociation des complexes cyclodextrines-composés lipophiles et la libération des composés lipophiles non inclus de leur liaison avec la cyclodextrine,
- que l'on sépare les différents raffinats obtenus,
- que l'on récupère les différents raffinats et en particulier la cyclodextrine libre purifiée.

2. Procédé selon la revendication 1, caractérisé par le fait que le solvant polaire anhydre est choisi dans le groupe comprenant l'éthanol, le méthanol, l'isopropanol, le n-propanol, le n-butanol, l'acétone.

3. Procédé selon la revendication 1, caractérisé par le fait que le solvant auquel on a recours est un mélange d'au moins deux solvants polaires anhydres choisis dans le groupe comprenant les mélanges éthanol/méthanol, éthanol/acétone et méthanol/acétone.

4. Procédé selon les revendications 1 à 3, caractérisé par le fait que l'on utilise une quantité de solvant polaire suffisante pour obtenir une décomplexation, cette quantité étant supérieure à environ 70 % en poids par rapport au mélange sec de départ.

5. Procédé selon les revendications 1 à 4, caractérisé par le fait que l'on extrait au moins 90 % des substances lipophiles initialement présentes dans le mélange à raffiner.

6. Procédé selon les revendications 1 à 5, caractérisé par le fait qu'il comporte un traitement préalable à l'aide d'au moins un solvant apolaire propre à extraire les composés lipophiles les plus faiblement liés à la cyclodextrine.

7. Procédé selon la revendication 6, caractérisé par le fait que le solvant apolaire est choisi dans le groupe comprenant les alcanes, les composés benzéniques, les dérivés chlorés et les étheroxydes, de préférence dans le groupe comprenant l'hexane, le tétrachlorure de carbone, le benzène, le dioxane, l'éther de pétrole, le diisopropyléther, le trichloréthylène et le toluène, l'hexane étant plus particulièrement préféré.

8. Procédé selon l'une des revendications 1 à 7, caractérisé par le fait que le traitement d'extraction est mis en oeuvre dans le cadre d'une technique d'extraction au dioxyde de carbone supercritique.

9. Procédé selon la revendication 6, caractérisé par le fait que le prétraitement au solvant apolaire est remplacé par une technique d'extraction au CO₂ supercritique.

## Claims

1. Process of refining mixtures comprising inclusion complexes between a cyclodextrin and lipophilic compounds, characterized by the fact :
- that the mixture to be refined is dehydrated at least in part when it is initially in a liquid form,
- that said mixture in a solid or semi-liquid form is brought into contact with at least an anhydrous polar solvent,
- that the dissociation of the cyclodextrins-lipophilic compounds complexes and the release of the non included lipophilic compounds from their attachment to cyclodextrin are provoked at least partially,
- that the different refinates obtained are separated,
- that the different refinates and in particular the free purified cyclodextrin are recovered.

2. Process according to claim 1, characterized by the fact that the anhydrous polar solvent is selected from the group comprising ethanol, methanol, isopropanol, n-propanol, n-butanol, acetone.

3. Process according to claim 1, characterized by the fact that the solvent used is a mixture of at least two anhydrous polar solvents selected from the group comprising mixtures of ethanol/methanol, of ethanol/acetone and of methanol/acetone.

4. Process according to claims 1 to 3, characterized by the fact that a quantity of polar solvent sufficient for obtaining a decomplexation is used, this quantity being greater than about 70 % by weight based on the dry starting mixture.

5. Process according to claims 1 to 4, characterized by the fact that at least 90 % of lipophilic compounds initially present in the mixture to be refined are extracted.

6. Process according to claims 1 to 5, characterized by the fact that it comprises a preliminary treatment with at least one apolar solvent suitable for extracting the lipophilic compounds which are most weakly attached to the cyclodextrin.

7. Process according to claim 6, characterized by the fact that the apolar solvent is selected from the group comprising alkanes, benzenic compounds, chlorinated derivatives and ether oxides, preferably from the group comprising hexane, carbon tetrachloride, benzene, dioxane, petroleum ether, diisopropyl ether, trichloroethylene and toluene, hexane being more particularly preferred.

8. Process according to one of claims 1 to 7, characterized by the fact that the extraction treatment is carried out by an extraction technique with supercritical carbon dioxide.

9. Process according to claim 6, characterized by the fact that the preliminary treatment with apolar solvent is replaced by an extraction technique with supercritical CO₂.

## Patentansprüche

1. Verfahren zum Raffinieren von Mischungen, welche Einschlußkomplexe zwischen einem Cyclodextrin und lipophilen Substanzen enthalten, dadurch gekennzeichnet, daß man
- mindestens teilweise das zu raffinierende Gemisch, wenn es ursprünglich flüssig ist, dehydratisiert,
- dieses Gemisch in festem oder halbflüssigem Zustand mit mindestens einem wasserfreien, polaren Lösungsmittel in Kontakt bringt,
- mindestens teilweise den Zerfall der Komplexe Cyclodextrine/lipophile Verbindungen und die Freisetzung der nicht eingeschlossenen lipophilen Verbindungen aus ihrer Bindung mit dem Cyclodextrin hervorruft,
- die verschiedenen erhaltenen Raffinate trennt,
- die verschiedenen Raffinate und insbesondere das gereinigte freie Cyclodextrin wiedergewinnt.

2. Verfahren gemäß Anspruch 1, dadurch gekennzeichnet, daß das wasserfreie polare Lösungsmittel ausgewählt ist aus der Gruppe bestehend aus Ethanol, Methanol, Isopropanol, n-Propanol, n-Butanol, Aceton.

3. Verfahren gemäß Anspruch 1, dadurch gekennzeichnet, daß das verwendete Lösungsmittel ein Gemisch von mindestens zwei wasserfreien, polaren Lösungsmitteln ist, ausgewählt aus der Gruppe bestehend aus den Mischungen Ethanol/Methanol, Ethanol/Aceton und Methanol/Aceton.

4. Verfahren gemäß den Ansprüchen 1 bis 3, dadurch gekennzeichnet, daß man eine ausreichende Menge an polarem Lösungsmittel verwendet, um eine Entkomplexierung zu erhalten, wobei diese Menge größer als etwa 70 Gew.-% in bezug auf das Ausgangstrockengemisch ist.

5. Verfahren gemäß den Ansprüchen 1 bis 4, dadurch gekennzeichnet, daß man mindestens 90 % der ursprünglich in dem zu raffinierenden Gemisch vorhandenen lipophilen Substanzen extrahiert.

6. Verfahren gemäß den Ansprüchen 1 bis 5, dadurch gekennzeichnet, daß es eine Vorbehandlung mit mindestens einem apolaren Lösungsmittel umfaßt, das dazu geeignet ist, die lipophilen Verbindungen, die an das Cyclodextrin am schwächsten gebunden sind, zu extrahieren.

7. Verfahren gemäß Anspruch 6, dadurch gekennzeichnet, daß das apolare Lösungsmittel ausgewählt ist aus der Gruppe bestehend aus den Alkanen, den Benzolverbindungen, den chlorierten Derivaten und den Etheroxiden, vorzugsweise aus der Gruppe umfassend Hexan, Tetrachlorkohlenstoff, Benzol, Dioxan, Petrolether, Diisopropylether, Trichlorethylen und Toluol, wobei das Hexan besonders bevorzugt ist.

8. Verfahren gemäß einem der Ansprüche 1 bis 7, dadurch gekennzeichnet, daß die Extraktionsbehandlung im Rahmen einer Extraktionstechnik mit superkritischem Kohlendioxid eingesetzt wird.

9. Verfahren gemäß Anspruch 6, dadurch gekennzeichnet, daß die Vorbehandlung mit dem apolaren Lösungsmittel durch eine Extraktionstechnik mit superkritischem CO₂ ersetzt wird.
